# EUROPEAN PATENT APPLICATION

(11) **EP 4 807 044 A1**
(43) Date of publication of application: **16.09.2026**
(21) Application number: 25163889.6
(22) Date of filing: 14.03.2025
(51) Int. Cl.: C25B 1/04, C25B 15/023

(54) **APPARATUS AND METHOD FOR TESTING MULTIPLE MEMBRANE ELECTRODE ASSEMBLIES**

(71) Applicant: Nederlandse Organisatie voor toegepast- natuurwetenschappelijk onderzoek TNO, 2595 DA 's-Gravenhage (NL)
(72) Inventor: VAN DER STEEN, Franciscus A. M., 2595 DA's-Gravenhage (NL)
(74) Representative: V.O.

(57) **Abstract**

The invention pertains to the testing of membrane electrode assemblies (MEAs), in particular to testing the performance of MEAs that are used for water electrolysis, more in particular for Proton Exchange Membrane (PEM) water electrolysis.

## Description

### Field

The invention pertains to the testing of membrane electrode assemblies (MEAs), in particular to testing the performance of MEAs that are used for water electrolysis, more in particular for Proton Exchange Membrane (PEM) water electrolysis.

### Introduction

As discussed in the JRC Report "EU harmonised protocols for testing of low temperature water electrolysers" 2021, JRC Report 122565, PEM is a water electrolysis technology, suitable for low temperature water electrolysis, that uses a membrane sheet as a solid electrolyte between two electrodes to form a MEA. The MEA with an anode compartment and a cathode compartment forms a single electrochemical cell.

Testing of MEAs is often desired as part of the development of improved MEAs, in particular for screening MEAs and/or operating conditions, and can also be desired for other reasons. In particular, evaluating performance under operation conditions of a single cell or short stack of cells is often desired to be carried out. These tests involve measuring the electrochemical properties in terms of cell voltage and current. These measurements can be used to determine the polarization curve of the cell. Said JRC Report 122565 shows in Fig. 13 a scheme of a apparatus for testing a PEM single sell or stack.

EP2871264A describes a test station for simultaneously testing a MEA fuel cell and a MEA electrolyzer, which in operation provides reagents from the MEA fuel cell to the MEA electrolyzer or vice versa.

EP281698A describes to a test station for testing either a cathode or an anode electrode of MEA fuel cell.

### Summary

The invention aims to provide an apparatus for testing MEAs with high throughput, to permit for more efficient testing more MEAs (or more operating conditions). The invention is especially useful, bot not limited to, testing the stability in operation and degradation of MEAs upon prolonged operation.

The invention pertains in a first aspect to a testing apparatus for simultaneously testing a plurality of electrochemical cells, wherein each of said electrochemical cells comprises a membrane electrode assembly (MEA) and is suitable for proton exchange membrane water electrolysis. The testing apparatus comprises for each electrochemical cell of said plurality of electrochemical cells: a liquid supply line, and an anode compartment gas withdrawal line and a cathode compartment gas withdrawal line that are each connectable to the electrochemical cell, such that the testing apparatus comprises a plurality of liquid supply lines, a plurality of an anode compartment gas withdrawal lines and a plurality of cathode gas withdrawal lines. The testing apparatus further comprises a liquid supply manifold to supply liquid to each of the plurality of electrochemical cells, said liquid supply manifold comprising said plurality of liquid supply lines and one or more flow regulating means, e.g. pumps and valves, for regulating the flow of liquid supplied the plurality of electrochemical cells. The testing apparatus further comprises an anode compartment gas withdrawal manifold which comprises the plurality of the anode compartment gas withdrawal lines, and a gas outlet, wherein said manifold is configured for joining the gas streams from the anode compartments of the electrochemical cells into a single gas stream. The testing apparatus further comprises a cathode compartment gas withdrawal manifold, wherein said manifold comprises the plurality of the cathode compartment gas withdrawal lines and a gas outlet, and is configured for joining the gas streams from the cathode compartments of the electrochemical cells into a single gas stream.

The testing apparatus also comprises electronic circuitry, comprising one or more parts, which electronic circuitry is electrically connectable to electrodes of each of the (MEA of the) plurality of electrochemical cells individually and is configured to provide an electric current to the each of the plurality of electrochemical cells and/or apply a potential to the electrochemical cell.

The electronic circuitry is further configured to perform electrical (and/or electronic) measurements, e.g. of voltage and/or current, which measurements are preferably indicative of the individual electrochemical performance of the MEA comprised in each of the plurality of the electrochemical cells. For example, the electronic circuitry is configured to perform EIS on each of the electrochemical cells.

Also provided is a testing system and a method of simultaneously testing a plurality of electrochemical cells in the testing system.

The invention provides for the testing of membrane electrode assemblies (MEAs), in particular to testing the performance of MEAs that are used for water electrolysis, more in particular for Proton Exchange Membrane (PEM) water electrolysis.

### Brief description of the drawings

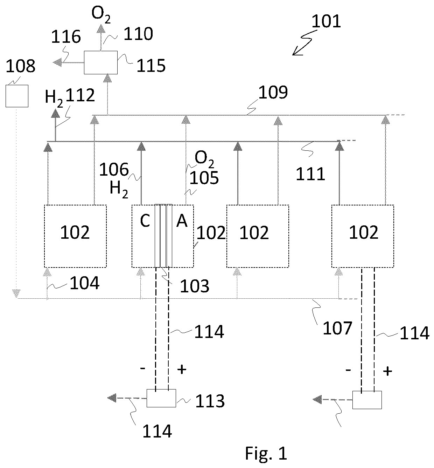

Figure 1 schematically illustrates an example test apparatus according to the invention.

Any embodiments illustrated in the figures are examples only and do not limit the invention.

### Detailed description

Advantages of the inventive testing apparatus include that it is configured for testing a plurality of electrochemical cells each comprising a MEA simultaneously, while monitoring the individual performance of the electrochemical cells. This is achieved by connecting the electrochemical cells in parallel with respect to the fluids (liquid supply, gas withdrawal) and by connecting the electrodes of each MEA electrically to a channel of a electric circuitry of the testing apparatus, e.g. to a multi-channel potentiostat. Simultaneously testing the MEAs is especially useful when doing degradation tests, which require a relatively long time. The same applies for performing EIS. Furthermore, the apparatus has a relatively compact and simple architecture.

The invention provides a apparatus for testing a plurality of MEAs, the apparatus can also be referred to as a testing apparatus, a testing system or a test station. The apparatus is configured for testing the plurality of MEAs simultaneously. Each MEA of the plurality of MEAs is comprised in an electrochemical cell during the testing, the cell further comprising an anode compartment and a cathode compartment. Hence, the testing apparatus is also for testing a plurality of electrochemical cells, the electrochemical cells comprising a MEA.

In a first aspect, the invention pertains to the testing apparatus without the plurality of electrochemical cells. In this aspect, the testing apparatus comprises fluid (liquid/gas) inlet and outlets that are connectable to the electrochemical cells, as well as electrical connections (leads) that are connectable to the electrodes of the MEAs. The apparatus is preferably capable of receiving, holding or supporting the plurality of electrochemical cells, with specific spaces (e.g. slots) for each electrochemical cell or with a spatially flexible set-up. In principle, it also possible that the plurality of electrochemical cells is located on an adjacent device or support and is fluidically and electrically coupled to the testing apparatus.

In a further aspect, the invention pertains to a testing system comprising the testing apparatus with the electrochemical cells, wherein the electrochemical cells are appropriately connected to the corresponding fluid inlets and outlets of the testing apparatus and to the electrical connections of the testing apparatus.

The apparatus comprises, for each electrochemical cell of said plurality of electrochemical cells, a combination of a liquid supply line, an anode compartment gas withdrawal line and a cathode gas withdrawal line, which lines are each connectable to the electrochemical cell, in particular to the anode compartment and the cathode compartment. Hence, the apparatus comprises a plurality of liquid supply lines, a plurality of an anode compartment gas withdrawal lines and a plurality of cathode gas withdrawal lines.

The plurality of liquid supply lines is, in an embodiment, provided by a liquid flow line (e.g., pipe ) with multiple outlet openings (e.g. distributed over the length of the pipe), each of the openings defining a supply line for supplying liquid to an individual electrochemical cell compartment. Similarly, the plurality of plurality of an anode compartment gas withdrawal lines can be provided by a common gas flow line (e.g. pipe) having a plurality of inlet openings, each of the inlet openings defining a flow line for withdrawing gas from a single anode compartment of an electrochemical cell. The same applies to the plurality of plurality of an cathode compartment gas withdrawal lines.

The term 'connectable' for fluid lines (supply lines and withdrawal lines) includes the presence of inlets and outlets of the apparatus that are connectable to the electrochemical cells e.g. with tubes, and includes embodiments wherein the testing apparatus comprises appropriate tubes with ends that can be directly attached to the electrochemical cell. The liquid supply line corresponds to an outlet of the apparatus; a gas withdrawal line corresponds to an inlet of the apparatus. In practice, a mixture of gas and liquid (e.g., droplets) may flow through a gas withdrawal line.

The apparatus may comprise further inlets and outlets for fluids. The operative testing system may comprise additional electrochemical cells that are connected, for fluids, in a different manner, or through different components of the apparatus. Hence, the term 'plurality of electrochemical cells' does not exclude the presence of additional electrochemical cells. As used herein, 'each electrochemical cell' refers to each of the plurality of electrochemical cells and does not exclude the presence of additional electrochemical cells.

The apparatus comprises, for each electrochemical cell, two electrical connections (leads) that are connectable to the anode and cathode of the cell.

The apparatus comprises a liquid supply manifold to supply liquid to each of the plurality of electrochemical cells. The liquid supply manifold generally has a liquid inlet, connectable to a source of liquid (e.g., demineralized water). The liquid supply manifold comprises the plurality of the liquid supply lines, each liquid supply line having an outlet that is connectable to an electrochemical cell. The liquid supply manifold distributes the liquid over the electrochemical cells.

The apparatus is configured for supplying a controlled amount of liquid to each of the plurality of electrochemical cells. Accordingly, the liquid supply manifold comprises one or more flow regulating means, such as, e.g., pumps and valves, for regulating the flow of liquid supplied the plurality of electrochemical cells. In an embodiment, the liquid supply manifold comprises a pump or a valve for controlling the liquid flow rate to the plurality of electrochemical cells jointly.

Preferably, the flow to each of said plurality of electrochemical cells can be regulated individually for each of said electrochemical cell. For example, each liquid supply line is provided with a flow regulating means.

For the plurality of electrochemical cells, the apparatus comprises at least a corresponding number of liquid supply lines that have a common liquid supply manifold.

Preferably, for each of the plurality of electrochemical cells, the apparatus comprises two liquid supply lines, namely for the anode compartment and for the cathode compartment. Optionally, a liquid supply manifold is used that is common to both the anode compartment liquid supply lines and the cathode compartment liquid supply lines.

The liquid is usually water.

The common liquid supply, using the liquid supply manifold, advantageously provides for a compact and simple design.

The liquid supply manifold is preferably made of a polymeric material, more preferably a polymer as discussed hereinafter for the gas withdrawal manifold. This advantageously contributes to high purity of the water supplied to the electrochemical cells. In particular ion leaching (e.g. of Fe ions) can be avoided, thereby reducing the risk of poisoning the electrolyser / electrochemical cell.

The apparatus typically further comprises a (first) control device configured to control the supply rate of the liquid to each of the plurality of electrochemical cells, in particular by controlling said flow regulating means. Preferably, the control device is configured to control the supply rate of the liquid to each electrochemical cell individually. The control device can be provided as hardware and/or software.

The liquid supply manifold for example, optionally, comprises a flow meter, for instance for each of the plurality of electrochemical cells individually.

In a further embodiment, a water pump controls the water flow to at least one of the electrochemical cells, preferably to all of the plurality of electrochemical cells.

Preferably, the apparatus comprises an anode compartment gas withdrawal manifold. This manifold comprises the plurality of the anode compartment gas withdrawal lines and comprises typically a gas outlet.

Preferably, the apparatus comprises a cathode compartment gas withdrawal manifold. This manifold comprises the plurality of the cathode compartment gas withdrawal lines and comprises typically a gas outlet.

The gas withdrawal manifolds are hence manifolds for withdrawing gas from the anode compartments respectively from the cathode compartments. In operation, generally, the anode compartment gas withdrawal manifold is connected exclusively to the anode compartments and the cathode compartment gas withdrawal manifold is connected exclusively to the cathode compartments.

The gas withdrawal manifold is preferably arranged for joining the gas streams from the anode respectively cathode compartments of the electrochemical cells into a single gas stream, which is further handled and vented. Thereby a compact and simple design of the apparatus is provided.

The gas withdrawal manifolds are preferably made of polymeric material. This provides for reliable operation in combination with operating the electrochemical cells for water electrolysis.

Preferably, the polymeric material is independently selected from the group consisting of polyvinyl chloride (PVC), low-density polyethylene (LDPE), high-density polyethylene (HDPE), polypropylene (PP), polystyrene (PS), acrylonitrile butadiene styrene (ABS), ethylene vinyl acetate (EVA), polyether ether ketone (PEEK), polyamide, polyester, polyurethane, polycarbonate, and fluoropolymer, e.g. polytetrafluoroethylene (PTFE), perfluoroalkoxy alkane (PFA), polyvinylidene fluoride (PVDF), fluorinated ethylene propylene (FEP), ethylene tetrafluoroethylene (ETFE).

Advantageously, the polymeric material is chemically inert, has a good chemical resistance, low gas permeability, good mechanical strength, and is flexible. This is advantageous for the gas withdrawal manifolds.

The gas withdrawal manifolds furthermore preferably, independently, comprise a gas/liquid separator, for separating liquid from the gas (e.g. entrained droplets). Preferably, the fluid streams from the anode compartments respectively cathode compartments are combined into a single stream upstream of the gas/liquid separator.

In an embodiment, the liquid outlet of the gas/liquid separator, of the anode gas withdrawal manifold and/or the cathode gas withdrawal manifold, is connected to a water exit channel for water to exit the system. This water exit channel may comprise a water level control for maintaining a controlled water level in the exit channel. The water level control contributes to safety by preventing gas escape, especially H₂ (g) escape.

Preferably, the gas withdrawal manifold each comprise, between the electrochemical cells (i.e., the gas inlets of the manifold) and the gas/liquid separator, a condenser. The condenser is preferably a heat exchanger. The condenser is used to cool the gas/liquid mixture to provide for better separation in the separator.

In an optional embodiment, the gas/liquid separator has (or each have) a liquid outlet connected to the electrochemical cell, more preferably to the liquid supply manifold. In this optional embodiment, the liquid connection from the gas/liquid separator of each gas withdrawal manifold to the liquid supply manifold, i.e. the liquid recycle connection, is preferably made of a polymeric material, more preferably one of the polymeric materials listed hereinabove. This advantageously contributes to the purity of the (recycle) liquid (water) supplied to the electrochemical cells in this optional embodiment.

The gas withdrawal manifolds preferably each independently contain a backpressure regulator (e.g. a valve) to regulate the pressure in the electrochemical cell compartments. Preferably, the system contains two backpressure regulators, one for the anode gas withdrawal manifold and one for the cathode gas withdrawal manifold.

The apparatus comprises electronic circuitry, comprising one or more parts. The electronic circuitry may be part of a controller, which controller is configured for controlling an electrical power supply to each of the plurality of electrochemical cells (in particular, to the electrodes of each of such cells, as comprised in the MEA of each of such cells), e.g. based on feedback signals received from each of the plurality of electrochemical cells (e.g., from the MEA of each of such cells). The controller is particularly arranged for controlling the electrical power supply to each of the plurality of electrochemical cells individually, e.g. based on the respective feedback signal received from each of the electrochemical cells, e.g. from the MEA of each of such cell. The controller is configured for processing sensor signals, e.g. including the feedback signals, received from the electrochemical cells. For example, the controller may comprise a multi-channel potentiostat and/or galvanostat, wherein each channel is individually controllable and associated with a respective one of the plurality of electrochemical cells (in particular, to the electrodes comprises in the MEA of each of the plurality of electrochemical cells). For example, each channel is provided by an set of electrical connections (leads) allowing to operate an individual MEA (in an electrochemical cell) in potentiostatic and/or galvanostatic mode.

The electronic circuitry is electrically connectable to each of the electrodes of each of the plurality of electrochemical cells individually (or each MEA thereof). The circuitry is configured to provide each of the plurality of electrochemical cells with electrical power, For example by applying direct electric current with for example a superimposed stimulus (perturbation) to the electrochemical cells. The apparatus may include, or be electrically connectable to, an electrical power source, optionally a battery.

As said, the apparatus comprises electrical connections (leads) that are connectable to the electrodes of the MEAs, e.g. directly or indirectly through electrical cables, to provide a connection between electronic circuitry comprised in the testing apparatus and the electrochemical cells. The electrochemical cells (or each MEA thereof) may for example be connected in parallel to the electronic circuitry.

The circuitry is further configured to perform (electrochemical) measurements, e.g. voltage and/or current, indicative of the individual electrochemical performance of the MEA comprised in each of the plurality of the electrochemical cells. In particular, the electronic circuitry is configured to perform measurements indicative of the performance of the MEA for each of the plurality of electrochemical cell individually. Hence, the performance of an individual electrochemical cell (and hence of an individual MEA comprised in it) can be determined. Hence, the electronic circuitry is connectable to at least two electrochemical cells, either by the presence of a dedicated electronic circuitry element for each electrochemical cell, or by providing electronic circuitry connectable to two or more electrochemical cells. The electric circuity furthermore has a data output channel to output the results of the measurements.

For instance, the apparatus comprises dedicated electronic circuitry for each of the plurality of electrochemical cells, or electronic circuitry that is common for two or more of said electrochemical cells.

Preferably, the electronic circuitry provides a potentiostat and/or galvanostat functionality for each electrochemical cell individually. Preferably, the electronic circuitry includes at least one potentiostat and/or galvanostat for each electrochemical cell.

For example, the testing apparatus, in particular the electronic circuitry, comprises a multi-channel potentiostat and/or galvanostat. Each channel of the multi-channel potentiostat and/or galvanostat may accordingly be associated with a respective electrochemical cell.

The electronic circuitry has a data output channel for outputting data indicative of the electrochemical performance of each of the plurality of electrochemical cells individually.

Preferably, the electronic circuitry is configured for performing Electrochemical Impedance Spectroscopy (EIS) on each of the plurality of electrochemical cells, preferably on each of said plurality of electrochemical cells individually and more preferably simultaneously, i.e. for simultaneously performing EIS on each individual electrochemical cell of said plurality of electrochemical cells.

The circuitry comprises for each of the plurality of the electrochemical cells a lead for the anode and a lead for the cathode, and accordingly provides an electrical channel for each of the plurality of electrochemical cells.

In an example embodiment, the electronic circuity comprises, in particular for each of the plurality of electrochemical cells, an electrometer, wherein the electrometer connected to a working sense lead and a reference electrode lead coupled to the electrochemical cells as inputs, and wherein the electrometer has an output that is coupled to a data (signal) output and coupled to an input of a high gain operational amplifier. This amplifier also has as input a potentiostatic set point. The amplifier has an outlet coupled to a counter electrode of the electrochemical cell. Thereby, potentiostat functionality is provided. It will be appreciated that potentiostat functionality may also be provided by different implementations. The circuitry furthermore preferably comprises a voltmeter connected to a working electrode drive lead and a resistor, to determine the current from the working electrode.

For example, the electronic circuitry provides a multi-channel potentiostat system with a potentiostat channel for each of the plurality of electrochemical cells, respectively a multi-channel galvanostat system with a galvanostat channel for each of the plurality of electrochemical cells. For example, each channel comprises an adjustable voltage-source and an ampere meter (electric current meter).

For example, the testing apparatus comprises a power supply, microcontroller, and communication interfaces for data output transfer that is common to the plurality of electrochemical cells.

Generally, the electrical measurements include, for example, the test protocols described in JRC Report JRC107053, EU harmonised test procedure: electrochemical impedance spectroscopy for water electrolysis cells, EUR 29267 EN, Publications Office of the European Union, Luxembourg, 2018, ISBN 978-92-79-88739-0, doi:10.2760/8984. For example, electrochemical impedance spectroscopy (EIS) is used as one of the electrochemical measurements. EIS is a powerful diagnostic method for PEM water electrolysis cells, that can provide useful information *in operando* on the performance and on the cell voltage losses associated with particular components.

For example, the electrochemical measurement involves applying a small alternating voltage to the electrochemical cell as a perturbation signal in potentiostatic mode and the (alternating current) response is measured. Or, for example, a small alternating current is applied in galvanostatic mode as a perturbation signal while measuring the alternating cell-voltage response.

For example, the testing apparatus comprises, for each of the plurality of electrochemical cells, a frequency response analyser (FRA), as is useful for performing EIS, more preferably in combination with a potentiostat or galvanostat (channel) for each of said cells.

The testing apparatus preferably comprises a cabinet (laboratory cabinet) for holding or supporting the plurality of electrochemical cells.

The use of a cabinet allows for creating a designated enclosed testing space, which decreases an influence of external variables on test results and increases safety of testing.

The testing apparatus for example has slots for each of the plurality of electrochemical cells, wherein the slots are provided e.g. by support or mounts.

Preferably, for each of the plurality of electrochemical cells, the testing apparatus comprises a liquid supply line, an anode compartment gas withdrawal line, and a cathode compartment gas withdrawal line, an anode electrical coupling line, a cathode electrical coupling line, and preferably a data output of the electric circuitry, and preferably a slot or at least a defined place for the electrochemical cell.

Preferably, the cabinet comprises a leak tray (plus water sensor) in the cabinet for capturing water spillage capturing and a water sensor for detection of water in the leak tray to monitor the operation.

Preferably, the cabinet is configured for ventilation through the cabinet, in particular ventilation to refresh the air inside the whole cabinet continuously and without obstruction. Preferably, the cabinet is configured in such a way that air can be drawn in from the bottom of the cabinet and vented out through the ventilation on top of the cabinet. Preferably, the cabinet has an air inlet at the bottom and an air outlet at the top.

Optionally, the cathode compartment gas withdrawal manifold (cathode gas manifold) comprises a temperature sensor and/or pressure sensor for each electrochemical cell. Optionally, the anode compartment gas withdrawal manifold (anode gad manifold) comprises a temperature sensor and/or a pressure sensor for each electrochemical cell.

Optionally, the cathode gas manifold comprises a gas/liquid separator, to remove liquid from the gas, e.g. a liquid/gas separation vessel. Optionally, the manifold comprises a demister for demisting gas from the gas/liquid separator. Optionally, the cathode gas manifold comprises a pressure sensor and/or a flow meter. In an embodiment, the cathode gas manifold comprises no flow meter. These optional features also apply to the anode gas manifold.

Additional sensors that could be used, optionally, are as depicted in Figure 15 of JRC Report 122565. However, since the inventive apparatus is capable of performing electronic measurements indicative of the performance of each electrochemical cell of the plurality of such cells individually, generally there is no need for gas flow meters in the gas withdrawal manifold. In particular, this contributes to being able to conduct simultaneous testing of the electrochemical cells with a relatively compact testing apparatus.

Also provided is the testing system comprising the testing apparatus and the plurality of electrochemical cells.

Each of the electrochemical cells comprises a MEA, an anode compartment and a cathode compartment. The MEA comprises the membrane, and the two electrodes (anode and cathode). Optionally, a third auxiliary electrode can be included in the electrochemical cell, e.g. as a reference electrode for a potentiostat channel of the electronic circuitry.

The membrane is sandwiched between the electrodes. The electrodes are connectable to the testing apparatus, e.g. comprise appropriate leads. For example, the testing apparatus comprises an electrical port for each electrode of the plurality of electrochemical cells.

The anode compartment comprises an outlet for gas (anode gas), the cathode compartment comprises an outlet for gas (cathode gas), these outlets are separate from each other.

The anode compartment comprises an inlet for the liquid, i.e. for water. Often, the cathode compartment also comprises an inlet for the liquid.

The electrochemical cell further comprises a housing for holding the MEA and providing the anode compartment and the cathode compartment, wherein the housing comprises opening corresponding to these inlets and outlets for fluids.

The testing system furthermore preferably comprises electrical cables connecting each electrode of the plurality of electrochemical cells to the electronic circuitry of the testing apparatus.

The testing system furthermore preferably comprises tubes connecting each inlet for liquid of each electrochemical cell of the plurality of electrochemical cells to an outlet opening of the liquid supply manifold and connecting each outlet for gas of each electrochemical cell of the plurality of electrochemical cells to an inlet opening of one of the gas withdrawal manifolds of the testing apparatus. The tubes are preferably made of a polymeric material, more preferably from the polymeric materials as discussed for the gas withdrawal manifold.

The MEA comprises a membrane, an anode sheet and a cathode sheet. The MEA may also comprise a catalyst, provided e.g. as catalyst particles, or e.g. as catalyst coating.

The membrane is a proton exchange membrane, for example made of perfluorosulfonic acid (PFSA) polymer.

In a preferred embodiment, the electrochemical cells are temperature-controlled cells. Preferably, the housing is provided with a temperature sensor and a heating element (and/or cooling element). Preferably, in operation, the temperature of each of the plurality of electrochemical cells is maintained and controlled individually.

In a further aspect, the invention also provides the combination of the testing apparatus in combination and a plurality of electrochemical cell housings, wherein the electrochemical cell housings do not yet contain a MEA. Accordingly, the invention may provide a kit comprising the testing apparatus and a plurality of electrochemical cell housings, wherein the housings are capable of receiving a MEA and are connectable to the testing apparatus. For example, the electrochemical cell housings are temperature-controlled housing, and preferably comprise a heating element and/or cooling element, and/or comprise a heat exchanging part.

The invention also provides a method of testing a plurality of MEAs simultaneously with the testing apparatus (or testing system) according to the invention.

The method involves, for each of the plurality of electrochemical cells: supplying water as liquid to each of the plurality of the electrochemical cells through the liquid supply manifold with a controlled supply rate, withdrawing gas from the anode compartment through the anode compartment gas withdrawal manifold, withdrawing gas from the cathode compartment through the cathode compartment gas withdrawal manifold (109), and performing electrochemical measurements using said electronic circuitry for each electrochemical cell individually and outputting data from said measurements.

The method involves performing water electrolysis in the electrochemical cell, with formation of H₂ at the cathode and supplied to the cathode gas withdrawal manifold, and with O₂ formed at the anode and supplied to the anode gas withdrawal manifold.

The method also involves supplying electrical power to the individual electrochemical cells in a controlled way, e.g. with controlled, current or voltage, e.g. with a small perturbation to a constant current or voltage. The latter can be used e.g. for EIS.

The method involves performing, with the electrical circuitry, one or more electrical / electrochemical measurements, simultaneously on the individual electrochemical cells, and outputting data of the results for the individual electrochemical cells. The measurements include, e.g., EIS, and/or measuring electrical current and/or voltage. The measurements are, highly preferably, indicative of the performance of the electrochemical cell individually, e.g. measuring electrical current and/or voltage, and outputting data from said measurements. The outputted data pertains to the individual electrochemical cells.

Preferably, the plurality of electrochemical cells is at least two, at least three, at least four, or at least five electrochemical cells; for example up to 10 or for example up to 20 electrochemical cells, though using more electrochemical cells is also possible.

The testing is conducted preferably at a temperature below 90°C.

**Figure 1** schematically illustrates an example testing apparatus according to the invention. In the figure, dashed units are optional. In particular, the presence of the electrochemical cells belongs to the testing system. The testing apparatus pertains to the equipment suitable for receiving and connecting to the electrochemical cells. In other words, the testing system comprises the testing apparatus and the electrochemical cells.

The testing apparatus (101) comprises a liquid supply line (104) for each of the plurality of electrochemical cells (102), and an anode compartment gas withdrawal line (105) and a cathode compartment gas withdrawal line (106) that are connectable to the electrochemical cell. In operation, the anode compartment gas withdrawal line (105) withdraws O₂ gas formed in the anode compartment and the cathode compartment gas withdrawal line (106) withdraws H₂ formed in the anode compartment of each of the plurality of electrochemical cells (102). Each of the plurality of electrochemical cells (102) comprises a membrane electrode assembly (MEA) (103) and is suitable for suitable for proton exchange membrane water electrolysis. The MEA comprises the cathode layer, the membrane, and the anode layer, stacked together. The MEA comprises the cathode compartment adjacent the cathode layer and the anode compartment adjacent the anode layer. These compartments are separated, for transport of liquids, by the MEA.

The testing apparatus comprises a liquid supply manifold (107) to supply liquid to each of the plurality of electrochemical cells. The liquid supply manifold (107) comprises a plurality of liquid supply lines (104) and one or more flow regulating means (108), which is e.g. a pump. The liquid supply manifold (107) distributes the liquid to the plurality of electrochemical cells. The flow regulating means (108) control the flow rate of the liquid (water) to the electrochemical cells, e.g. individually or for multiple electrochemical cells in common.

The testing apparatus comprises an anode compartment gas withdrawal manifold (109) which comprises the plurality of the anode compartment gas withdrawal lines (105), and a gas outlet (110). The anode compartment gas withdrawal manifold (109) is configured for combining the gas streams from the anode compartments (O₂) of the electrochemical cells into a single gas stream. The anode compartment gas withdrawal manifold (109) comprises a gas/liquid separator (115) which has the gas outlet gas outlet (110) and a liquid outlet (116). The testing apparatus comprises a cathode compartment gas withdrawal manifold (111), which contains the plurality of the cathode compartment gas withdrawal lines (106) and a gas outlet (112). The cathode compartment gas withdrawal manifold (111) is configured for combining the gas streams (H₂) from the cathode compartments of the electrochemical cells into a single gas stream. The cathode compartment gas withdrawal manifold (111) preferably also comprises a gas/liquid separator (not shown).

The testing apparatus comprises electronic circuitry (113), comprising one or more parts, which circuitry is electrically connectable (114) to electrodes of each of the plurality of electrochemical cells individually and is configured to provide an electrical current to the each of the plurality of electrochemical cells and/or to apply a potential to the electrochemical cell. The electronic circuitry is further configured to perform electrical measurements, e.g. of voltage and/or current, indicative of the individual electrochemical performance of the MEA comprised in each of the plurality of the electrochemical cells. The electric circuity (113) furthermore has a data output channel (114) to output the results of the measurements.

In Figure1, the electronic circuitry (113) is shown for only two electrochemical cells (102) but in practice each of the plurality of electrochemical cells is connected to such circuitry, wherein the circuitry preferably comprises a dedicated part for each of the plurality of electrochemical cells.

## Claims

1. A testing apparatus (101) for simultaneously testing a plurality of electrochemical cells (102) each comprising a membrane electrode assembly (MEA) (103) and suitable for proton exchange membrane water electrolysis, wherein the testing apparatus comprises:
- for each electrochemical cell (102) of said plurality of electrochemical cells, a liquid supply line (104), an anode compartment gas withdrawal line (105) and a cathode compartment gas withdrawal line (106) that are connectable to the electrochemical cell, such that the testing apparatus comprises a plurality of liquid supply lines, a plurality of an anode compartment gas withdrawal lines and a plurality of cathode gas withdrawal lines;
- a liquid supply manifold (107) to supply liquid to each of the plurality of electrochemical cells, said liquid supply manifold (107) comprising said plurality of liquid supply lines (104) and one or more flow regulating means (108), e.g. pumps and valves, for regulating the flow of liquid supplied the plurality of electrochemical cells;
- an anode compartment gas withdrawal manifold (109) which comprises the plurality of the anode compartment gas withdrawal lines (105), and a gas outlet (110), configured for joining the gas streams from the anode compartments of the electrochemical cells into a single gas stream;
- a cathode compartment gas withdrawal manifold (111), comprising the plurality of the cathode compartment gas withdrawal lines (106) and a gas outlet (112), configured for joining the gas streams from the cathode compartments of the electrochemical cells into a single gas stream; and
- electronic circuitry (113), comprising one or more parts, that is electrically connectable (114) to electrodes of each of the plurality of electrochemical cells individually and is configured to provide an electric current to the each of the plurality of electrochemical cells and/or apply a potential to the electrochemical cell,
wherein the electronic circuitry is further configured to perform electrical measurements, e.g. of voltage and/or current, indicative of the individual electrochemical performance of the MEA comprised in each of the plurality of the electrochemical cells.

2. The testing apparatus according to claim 1, wherein the electronic circuitry provides a potentiostat and/or galvanostat functionality for each electrochemical cell individually.

3. The testing apparatus according to claim 1 or 2, wherein the electronic circuitry comprises a multi-channel potentiostat and/or galvanostat.

4. The testing apparatus according to any of the preceding claims, wherein the gas withdrawal manifolds each comprise a gas/liquid separator and/or a backpressure regulator.

5. The testing apparatus according to any of the preceding claims, wherein the cathode compartment gas withdrawal manifold (109) and/or the anode compartment gas withdrawal manifold (111) is made of a polymeric material.

6. The testing apparatus according to any of the preceding claims, further comprising a cabinet and/or supports for supporting the plurality of electrochemical cells.

7. The testing apparatus according to any of the preceding claims, wherein the electronic circuitry (113) is configured for conducting

8. A testing system comprising the testing apparatus according to any of claims 1 to 7 and the plurality of electrochemical cells, wherein each of the plurality of electrochemical cells comprises:
- a MEA comprising a membrane, an anode layer and a cathode layer, wherein the membrane is a proton exchange membrane;
- an anode compartment having a liquid inlet and a gas outlet;
- a cathode compartment having a gas outlet.

9. A testing system according to claim 8, wherein the electrochemical cells are temperature-controlled cells.

10. A method of simultaneously testing a plurality of electrochemical cells in the testing system of claim 8 or 9, the method comprising:
- supplying water as liquid to the electrochemical cells through the liquid supply manifold with a controlled supply rate;
- withdrawing gas from the anode compartment through the anode compartment gas withdrawal manifold (111) ;
- withdrawing gas from the cathode compartment through the cathode compartment gas withdrawal manifold (109); and
- performing electrochemical measurements using said electronic circuitry for each electrochemical cell individually and outputting data from said measurements.

11. The method of claim 10, wherein the electrochemical measurements include Electrochemical Impedance Spectroscopy (EIS) on each of the plurality of electrochemical cells individually.
